# EUROPEAN PATENT APPLICATION

(11) **EP 3 611 424 A1**
(43) Date of publication of application: **19.02.2020**
(21) Application number: 18825856.0
(22) Date of filing: 13.06.2018
(51) Int. Cl.: F21S 10/04, F21S 10/00, F21S 2/00

(54) **METHOD FOR SIMULATING MULTI-LAYERED FLAME USING OLED LIGHT-EMITTING SHEET, AND OLED LIGHT-EMITTING SHEET**

(71) Applicant: Shenzhen Tongfang Optoelectronic Technology Co., Ltd., Shenzhen, Guangdong 518110 (CN)
(72) Inventor: FAN, Baosheng, Shenzhen, Guangdong 518000 (CN)
(74) Representative: Zenz Patentanwälte Partnerschaft mbB
(86) International application number: PCT/CN2018/091133
(87) International publication number: WO 2019/237289

(57) **Abstract**

The present invention provides a method for emulating a multilayered frame using an OLED, in which the body of the OLED is cut into a plurality of flame sheets stacked on each other and isolated from each other. The body and the flame sheets are fabricated into the same shape as the flame shape of a real fire. Each of the flame sheets is electrically connected to a controller via a conductive wire. The brightness of each flame sheet is controlled by a controller to emulate a multi-layered shape of flame. The resulting shape of flame is similar to a flame shape of a burning real fire, thereby providing a vivid emulation effect that can desirably decorate the environment and heighten the atmosphere. The present invention also provides an OLED manufactured with such a method.

## Description

### TECHNICAL FIELD

The present invention relates to electronic candle lamps, and more particularly to a method of emulating a multilayered flame using an OLED and an OLED manufactured with such a method.

### BACKGROUND

At present, some typical electronic candle lamps use OLEDs to emulate a flame using the following method. First, an OLED is formed into a shape of flame of a burning real fire. Then, the OLED is powered on and lightened to emulate the shape of flame of a burning real fire. However, such an OLED is only able to emulate a single-layered shape of flame but cannot emulate a multilayered shape of flame.

### SUMMARY

It is an objective of the present invention to overcome the disadvantages of prior art mentioned above by providing a method for emulating a multilayered flame using an OLED.

The present invention provides a method for emulating a multilayered flame using an OLED, comprising the steps of:
(1) forming a body by fabricating the OLED into a flame shape of a real fire;
(2) cutting the body into a plurality of flame sheets stacked sequentially, the flame sheets having a same shape as the flame shape of a real fire, and every two adjacent flame sheets being spaced apart from each other by a distance; and
(3) electrically connecting each of the flame sheets to a controller via a conductive wire, the controller being configured to control closing and opening of a circuit, magnitude of a current, and a power-on duration.

Further, a notch is formed at a top of an outermost flame sheet, a top of a second outermost flame sheet adjacent to the outermost flame sheet passes through the notch, the controller controls a left part and a right part of the outermost flame sheet to be alternately lightened and extinguished, and the controller controls flame sheets other than the outermost flame sheet to have a brightness that decreases gradually from inside to outside.

Specifically, the body and the flame sheets have a leaf like shape or water-drop like shape.

Specifically, every two adjacent flame sheets are spaced apart from each other by a distance ranged from 0.005 to 0.09mm.

The present invention also provides an OLED for emulating a multilayered flame, comprising a body, the body having a same shape as a flame shape of a real fire.

The body is cut into a plurality of flame sheets stacked sequentially, the flame sheets having the same shape as the flame shape of a real fire, and every two adjacent flame sheets being spaced apart from each other by a distance.

Each of the flame sheets is electrically connected to a controller via a conductive wire, the controller being configured to control closing and opening of a circuit, magnitude of a current, and a power-on duration.

Further, a notch is formed at a top of an outermost flame sheet, and a top of a second outermost flame sheet adjacent to the outermost flame sheet passing through the notch.

Specifically, the body and the flame sheets have a leaf like shape or water-drop like shape.

Specifically, every two adjacent flame sheets are spaced apart from each other by a distance ranged from 0.005 to 0.09mm.

Further, both side surfaces of the body are covered by a transparent plastic protective film.

According to the present invention, the body is cut into a plurality of flame sheets stacked one another and isolated from each other and the brightness of each flame sheet is controlled by a controller to emulate a multi-layered shape of flame. The resulting shape of flame is similar to a shape of flame from a burning real fire, thereby providing a vivid emulation effect that can desirably decorate the environment and heighten the atmosphere.

### BRIEF DESCRIPTION OF THE DRAWINGS

In order to explain the technical solutions of the present invention more clearly, the drawings to be used in the embodiments will be briefly described below. It is apparent that the drawings in the following description only show some embodiments of the present invention. For those of ordinary skill in the art, other drawings can be obtained without any creative effort on the basis of these drawings.

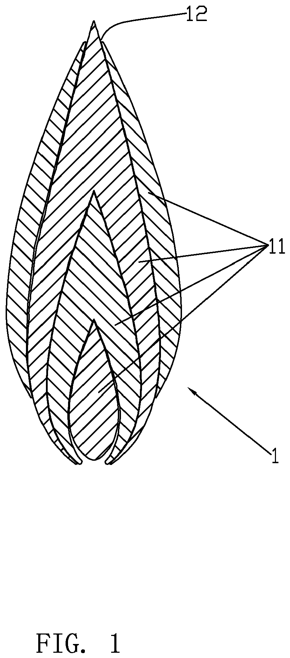

FIG. 1 is a schematic view of an OLED according to an embodiment of the present invention.

### DESCRIPTION OF THE EMBODIMENTS

Technical solutions in embodiments of the present invention will be described hereinafter clearly and thoroughly with reference to the drawings for the embodiments of the present invention.

### First embodiment: a method for emulating a multilayered flame using an OLED

As shown in FIG. 1, a method for emulating a multilayered flame using an OLED according to an embodiment of the present invention comprises the following steps:
(1) forming a body by fabricating the OLED into a flame shape of a burning real fire as a body 1, the body 1 may have a leaf like shape or water-drop like shape;
(2) cutting the body 1 into a plurality of flame sheets 11 stacked sequentially, the flame sheets 11 have the same shape as the flame shape of a burning real fire. The flame sheets 11 may have a leaf like or water-drop like shape. Every two adjacent flame sheets 11 are spaced apart from each other by a distance, ranged from 0.005 to 0.09mm, for example, to make every two adjacent flame sheets 11 OLED from each other;
(3) electrically connecting each of the flame sheets 11 to a controller (not shown) via a wire. The controller is configured to control closing and opening of a circuit, magnitude of a current, and a power-on duration, by controlling closing and opening of the circuit, the flame sheets 11 can be lightened or extinguished, by changing the magnitude of the current, the display brightness of the flame sheets 11 can be adjusted, by controlling the power-on duration, the illumination time of the flame sheets 11 can be controlled.

According to the present invention, the body 1 is cut into a plurality of flame sheets 11 stacked one another and isolated from each other and the brightness of each flame sheet 11 is controlled by a controller to emulate a multi-layered shape of flame. The resulting shape of flame is similar to the shape of flame from a burning real fire, thereby providing a vivid emulation effect that can desirably decorate the environment and heighten the atmosphere.

Further, a notch 12 is formed at the top of the outermost flame sheet 11. The top of the flame sheet 11 adjacent to the outermost flame sheet 11 passes through the notch 12. In addition to such design, the controller is used to control the left and right parts of the outermost flame sheet 11 to be alternately lightened and extinguished. That is, while the left part of the flame sheet 11 is lightened, the right part of the flame sheet 11 is extinguished, and while the left part of the flame sheet 11 is extinguished, the right part of the flame sheet 11 is lightened. The controller controls flame sheets 11 other than the outermost one to have a brightness that decreases gradually from inside to outside, thereby emulating an effect of a guttering tongue of flame.

Specifically, in this embodiment, the body 1 is cut into four flame sheets 11 that are stacked sequentially.

Further, both side faces of the body 1 are covered by a transparent plastic protective film (not shown) which serves to protect the OLED 1.

### Second embodiment: an OLED for emulating a multilayered flame

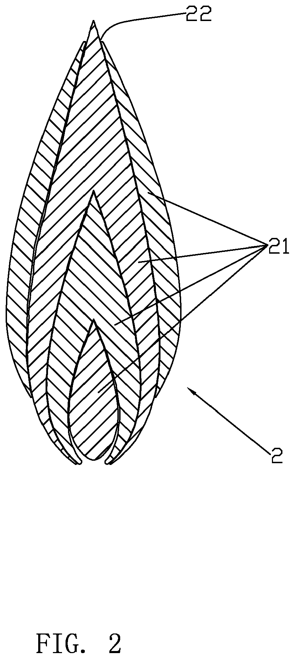

As shown in FIG. 2, an embodiment of the present invention further provides an OLED for emulating a multilayered flame. The OLED comprises a body 2 having the same shape as a flame shape of a burning real fire. The body 2 may have a leaf like or water-drop like shape.

The body 2 is cut into a plurality of flame sheets 21 stacked sequentially. The flame sheets 21 have the same shape as the flame shape of a burning real fire. The flame sheets 21 may have a leaf like or water-drop like shape. Every two adjacent flame sheets 21 are spaced apart from each other by a distance, ranged from 0.005 to0.09mm, for example, to make every two adjacent flame sheets 21 OLED from each other.

Each of the flame sheets 21 is electrically connected to a controller (not shown) via a conductive wire. The controller is configured to control closing and opening of a circuit, magnitude of a current, and a power-on time. By controlling closing and opening of the circuit, the flame sheets 21 can be lightened or extinguished. By changing the magnitude of the current, the display brightness of the flame sheets 21 can be adjusted. By controlling the power-on time, the illumination time of the flame sheets 21 can be controlled.

According to the present invention, the body 2 is cut into a plurality of flame sheets 21 stacked on one another and OLED from each other and the brightness of each flame sheet 21 is controlled by a controller to emulate a multi-layered shape of flame. The resulting shape of flame is similar to a shape of flame from a burning real fire, thereby providing a vivid emulation effect that can desirably decorate the environment and heighten the atmosphere.

Further, a notch 22 is formed at the top of the outermost flame sheet 21. The top of the flame sheet 21 adjacent to the outermost flame sheet 21 passes through the notch 22. In addition to such design, the controller is used to control the left and right parts of the outermost flame sheet 21 to be alternately lightened and extinguished. That is, while the left part of the flame sheet 21 is lightened, the right part of the flame sheet 21 is extinguished, and while the left part of the flame sheet 21 is extinguished, the right part of the flame sheet 21 is lightened. The controller controls flame sheets 21 other than the outermost one to have a brightness that decreases gradually from inside to outside, thereby emulating an effect of a guttering tongue of flame.

Specifically, in this embodiment, the body 2 is cut into four flame sheets 21 that are stacked sequentially.

Further, both side faces of the body 2 are covered by a transparent plastic protective film (not shown) which serves to protect the body 1.

Described above are preferred embodiments of the present invention, and it should be noted that numerous improvements and modifications can be made by those of ordinary skill in the art without departing from the principles of the present invention, and these improvements and modifications shall fall within the scope of the present invention.

## Claims

1. A method for emulating a multilayered flame using an OLED, **characterized in that** the method comprises the steps of:
(1) forming a body by fabricating the OLED into a flame shape of a real fire;
(2) cutting the body into a plurality of flame sheets stacked sequentially, the flame sheets having a same shape as the flame shape of a real fire, and every two adjacent flame sheets being spaced apart from each other by a distance; and
(3) electrically connecting each of the flame sheets to a controller via a conductive wire, the controller being configured to control closing and opening of a circuit, magnitude of a current, and a power-on duration.

2. The method for emulating a multilayered flame using an OLED of claim 1, wherein a notch is formed at a top of an outermost flame sheet, a top of a second outermost flame sheet adjacent to the outermost flame sheet passes through the notch, the controller controls a left part and a right part of the outermost flame sheet to be alternately lightened and extinguished, and the controller controls flame sheets other than the outermost flame sheet to have a brightness that decreases gradually from inside to outside.

3. The method for emulating a multilayered flame using an OLED of claim 1, wherein the body and the flame sheets have a leaf like shape or water-drop like shape.

4. The method for emulating a multilayered flame using an OLED of claim 1, wherein every two adjacent flame sheets are spaced apart from each other by a distance ranged from 0.005 to 0.09mm.

5. An OLED for emulating a multilayered flame, **characterized in that** the OLED comprises a body, the body has a same shape as a flame shape of a real fire,
wherein the body is cut into a plurality of flame sheets stacked sequentially, the flame sheets having the same shape as the flame shape of a real fire, and every two adjacent flame sheets being spaced apart from each other by a distance; and
each of the flame sheets is electrically connected to a controller via a conductive wire, the controller being configured to control closing and opening of a circuit, magnitude of a current, and a power-on duration.

6. The OLED for emulating a multilayered flame of claim 1, wherein a notch is formed at a top of an outermost flame sheet, and a top of a second outermost flame sheet adjacent to the outermost flame sheet passing through the notch.

7. The OLED for emulating a multilayered flame of claim 1, wherein the body and the flame sheets have a leaf like shape or water-drop like shape.

8. The OLED for emulating a multilayered flame of claim 1, wherein every two adjacent flame sheets are spaced apart from each other by a distance ranged from 0.005 to 0.09mm.

9. The OLED for emulating a multilayered flame of claim 1, wherein both side surfaces of the body are covered by a transparent plastic protective film.
